# EUROPÄISCHE PATENTANMELDUNG

(11) **EP 3 543 323 A1**
(43) Veröffentlichungstag der Anmeldung: **25.09.2019**
(21) Anmeldenummer: 18163043.5
(22) Anmeldetag: 21.03.2018
(51) Int. Cl.: C11B 1/00, C11B 13/00, C11C 3/00, C11C 3/02, C08L 63/00, C08L 93/00, C09D 193/00, C09D 191/00, C09D 163/00, C12P 7/64

(54) **VERWENDUNG EINES INSEKTENÖLS IN HARZEN FÜR BESCHICHTUNGS- UND KLEBSTOFFZUSAMMENSETZUNGEN**

(71) Anmelder: Bergolin GmbH & Co. KG, 27711 Osterholz-Scharmbeck (DE)
(72) Erfinder: Kaune, Martin, 26125 Oldenburg (DE)
(74) Vertreter: Meissner Bolte Partnerschaft mbB

(57) **Zusammenfassung**

Die Erfindung betrifft die Verwendung eines Insektenöls zur Herstellung eines Harzes für eine Beschichtungs- und/oder Klebstoffzusammensetzung. Darüber hinaus betrifft die Erfindung auch Verfahren zur Herstellung eines Harzes für eine Beschichtungs- und/oder Klebstoffzusammensetzung, Schritte umfassend bei denen man a) ein Insektenöl bereitstellt; und b1) das Insektenöl mit einem oder mehreren Polyolen umsetzt, und/oder b2) das Insektenöl epoxidiert, oxidiert, hydriert und/oder hydroxiliert, wobei Schritt (b2) vor oder nach Schritt (b1) durchgeführt wird.

## Beschreibung

Die vorliegende Erfindung betrifft Verfahren und Verwendungen zur Herstellung eines Harzes für eine Beschichtungs- oder Klebstoffzusammensetzung.

In der Lack- und Klebstoffindustrie werden Öle zur Herstellung von Harzen benötigt. Diese Harze bilden die Ausgangsstoffe für die Herstellung von Lack- und Beschichtungs- sowie Klebstoffzusammensetzungen. Lange Zeit wurden größtenteils synthetische oder fossile Öle als Basis für diese Herstellungsverfahren verwendet. Aufgrund der begrenzten Verfügbarkeit fossiler Rohstoffe, wurde jedoch bereits in der Vergangenheit nach regenerativen Alternativen gesucht. So wurden z. B. Baum- und Wurzelharze als Basis für Rohstoffe für die Beschichtungs- und Klebstoffherstellung verwendet. Daneben wurden auch aus dem Öl von Saatpflanzen, wie Sonnenblumen, Raps oder Leinsamen, Rohstoffe (Alkydharze, epoxierte Harze oder hydroxylhaltige Oligomere) für diese Industriezweige gewonnen. Die aus solchen natürlichen Ölen hergestellten Lacke und Klebstoffe finden derzeit beispielsweise Verwendung in Deck- und Klarlacken für die Fahrzeug- und Flugzeugindustrie sowie in Flüssigkunststoffen, die im Fußbodenbereich oder auf Rotorblättern von Windenergieanlagen eingesetzt werden.

Ein entscheidender Nachteil solch pflanzlicher Öle besteht jedoch darin, dass durch die exzessive Verwendung der pflanzlichen Öle Monokulturen gefördert werden, die in der Folge zu bekannten landwirtschaftlichen Problemen führen (Auslaugen von Ackerböden, Artensterben, Abhängigkeiten lokaler Bauern, Zunahme der Verwendung genetisch modifizierter Pflanzen z. B. zur Ertragssteigerung). Darüber hinaus steht die industrielle Verwendung der pflanzlichen Öle immer im direkten Wettbewerb zur Verwendung solcher Öle in der Nahrungsmittelindustrie.

Es besteht daher ein großer Bedarf an neuen regenerativen Ölquellen für die Beschichtungs- und Klebstoffindustrie. Die Ölquellen sollten in der Lage sein, den großen Bedarf zu bedienen und gleichzeitig nicht-regenerierbare Ressourcen schonen.

### Beschreibung

Erfindungsgemäß wird diese Aufgabe durch die Verwendung von Insektenölen gelöst, insbesondere durch eine Verwendung mit den Merkmalen des Anspruchs 1 und ein Verfahren mit den Merkmalen von Anspruch 2. Somit betrifft die Erfindung in einem ersten Aspekt die Verwendung eines Insektenöls zur Herstellung eines Harzes für eine Beschichtung- und/oder Klebstoffzusammensetzung. In einem zweiten Aspekt betrifft die Erfindung ein Verfahren zur Herstellung eines Harzes, insbesondere eines Harzes für eine Beschichtungs- und/oder Klebstoffzusammensetzung, Schritte umfassend bei denen man
a) ein Insektenöl bereitstellt; und
b1) das Insektenöl mit einem oder mehreren Polyolen umsetzt, und/oder
b2) das Insektenöl epoxidiert, oxidiert, hydriert und/oder hydroxiliert, wobei Schritt (b2) vor oder nach Schritt (b1) durchgeführt wird.

Die erfindungsgemäße Verwendung kann dieselben Verfahrensschritte umfassen, die hierin für das Verfahren näher erläutert sind. Weitere Merkmale der Verwendung, wie die Art des Insektenöls, Harzes und der Zusammensetzung sind an anderer Stelle hierin definiert.

Verschiedene Insektenarten werden, vor allem in afrikanischen und asiatischen Ländern, als signifikante Nahrungsquellen betrachtet. Diese Insektenarten enthalten unterschiedliche Mengen an Proteinen, Fetten, Mineralien und Vitaminen. Überraschenderweise wurde nun festgestellt, dass sich die in den Insekten enthaltenen Öle auch zur Bereitstellung von Rohstoffen für die Beschichtungs- und Klebstoffindustrie eignen. Dabei stellen insbesondere der sehr schnelle Generationszyklus der Insekten und die damit verbundene schnelle Erzeugung neuer Biomasse, ihre geringen Vermehrungsansprüche und die hohe Energieverfügbarkeit entscheidende Vorteile gegenüber der Verwendung von fossilen Mineralölen oder Pflanzenölen dar. Aufgrund der besonders geringen Vermehrungsansprüche von Insekten ist es möglich, die Insekten mit Abfallprodukten zu kultivieren und damit sowohl einen Beitrag zur Abfallbeseitigung zu leisten, als auch das Grundmaterial für die vorliegende Erfindung bereitzustellen. Bevorzugt werden daher Insekten verwendet, die mit Abfallprodukten kultiviert wurden, z. B. Fliegenmaden. Darüber hinaus können Insektenöle verwendet werden, die einen Ausschuss bei der Futtermittelproduktion darstellen. Dort werden Insekten wegen ihres hohen Proteingehalts verstärkt eingesetzt. Der hohe Ölgehalt der Insektenlarven ist allerdings für viele Nutztiere nicht verträglich, sodass die Insekten über Pressverfahren vorverarbeitet werden müssen, bei denen als Nebenprodukt reine Insektenöle anfallen. Das Insektenöl ist somit bevorzugt Insektenöl, das als Nebenprodukt bei der Nahrungs- oder Futtermittelproduktion angefallen ist.

Mittels des erfindungsgemäßen Verfahrens bzw. der erfindungsgemäßen Verwendung können Harze hergestellt werden, die insbesondere für die Verwendung in oder Herstellung einer Beschichtungs- und/oder Klebstoffzusammensetzung geeignet sind. Die Harze, Beschichtungs- und Klebstoffzusammensetzungen sind an anderer Stelle hierin näher beschrieben.

In einem Schritt (a) des Verfahrens wird zunächst ein Insektenöl bereitgestellt. "Insektenöl" bezeichnet in diesem Zusammenhang den fettlöslichen Anteil eines Insekts, wobei das Insekt z. B. im Stadium einer Insektenlarve sein kann, bzw. die Fett- und Lipidfraktion. Der Begriff Insektenöl kann in bestimmten Ausführungsformen auch ausschließlich aus Insekten isoliertes Öl bezeichnen. Insektenöl kann Tri-, Di-, und Monoglyceride, freie Fettsäuren, Phosphatide, Cerebroside, Terpene, Sterole, Fettalkohole, fettlösliche Vitamine und andere fettlösliche Substanzen umfassen. Erfindungsgemäß wird insbesondere von den in dem Insektenöl enthaltenen Tri-, Di- und Monoglyceriden sowie den freien Fettsäuren Gebrauch gemacht. Verfahren, die geeignet sind, um Insektenöl aus Insekten zu extrahieren, sind Fachleuten bekannt und z. B. in US 2012/0123141 A1 beschrieben.

Das Insektenöl kann aufgereinigt sein, d. h. z. B. von fettlöslichen aber unerwünschten Bestandteilen befreit sein. Es ist dabei jedoch nicht zwingend erforderlich, das Insektenöl vollständig aufzureinigen. So kann das Insektenöl bzw. die darin enthaltenen Tri-, Di-, und Monoglyceride und/oder freie Fettsäuren z. B. lediglich durch geeignete Verfahren angereichert werden, ohne andere, z. B. nicht fettlösliche Fraktionen vollständig zu entfernen.

Das Insektenöl kann gewonnen sein aus Insekten einer oder mehrerer Insektenarten ausgewählt aus der Gruppe bestehend aus Heuschrecken, Käfer, geflügelte Termiten, Bienen, Wespen, aquatische Insekten, Grille, Schmetterling, Fliege, Wanzen, Hautflügler, Zweiflügler und dergleichen. Dem Fachmann sind diese und geeignete weitere Insekten bekannt. Eine geeignete Fliegenart ist z. B. die Soldatenfliege (*Hermetia illucens*).

In der Regel durchlaufen Insekten während ihrer Entwicklung die Entwicklungsstadien Ei (Ovoparie), Larve (Larviparie), Puppe (Pupiparie) und erwachsenes Tier (Imago). Das Insektenöl ist vorzugsweise aus einem Entwicklungsstadium gewonnen, in dem das Insekt einen maximalen Ölanteil aufweist. Da Insekten, die ein Puppenstadium durchlaufen, in ihrer Zeit als Puppe keine Nahrung aufnehmen, müssen die Insekten für dieses Entwicklungsstadium entsprechend höhere Mengen an Fetten und Lipiden speichern, um in der Lage zu sein, die Metamorphose zur Imago zu durchstehen. Entsprechend ist das Insektenöl in einer Ausführungsform aus Insektenlarven oder Insektenpuppen gewonnen, vorzugsweise aus Insektenlarven. In bestimmten Ausführungsformen können die Larven Maden oder Raupen sein. Dabei sind späte Larvenstadien besonders bevorzugt, in denen das Insekt bereits Gelegenheit hatte, den Fett- und Lipidanteil zu erhöhen, z. B. das letzte Larvenstadium, d.h. das Larvenstadium bevor sich die Larve verpuppt. Fachleuten ist bekannt, dass sich die Anzahl der Larvenstadien zwischen verschiedenen Insektenarten unterscheidet.

Auch die Insektenöle unterschiedlicher Insektenarten unterscheiden sich in ihrer Fettsäurezusammensetzung. In bestimmten Ausführungsformen kann somit durch Auswahl eines bestimmten Insektenöls die Fettsäurezusammensetzung an spezifische Anforderungen an die herzustellende Beschichtungs- oder Klebstoffzusammensetzung angepasst werden.

Die Fettsäurezusammensetzung von Insekten unterscheidet sich z. B. wie in der folgenden Tabelle gezeigt.

| **Insektenart** | **Gesättigte Fettsäuren [%]** | **Einfach ungesättigte Fettsäuren [%]** | **Mehrfach ungesättigte Fettsäure [%]** |
|---|---|---|---|
| Schmetterlingslarven | 37 | 23 | 40 |
| Käferlarven | 40 | 35 | 25 |
| Wanzen larven | 38 | 33 | 29 |
| Larven Hautflügler | 28 | 47 | 25 |
| Termitenlarven | 42 | 22 | 36 |
| Zweiflüglerlarven (Soldatenfliegen) | 35 | 45 | 20 |
| Heuschrecken | 29 | 24 | 47 |

Bevorzugt weist das Insektenöl somit einen Anteil gesättigter Fettsäuren von 25% bis 45% auf, bezogen auf die Gesamtmenge von Fettsäuren in dem Insektenöl. Mit anderen Worten umfasst das Insektenöl bevorzugt einen Anteil gesättigter Fettsäuren von 25% oder mehr, bezogen auf die Gesamtmenge von Fettsäuren in dem Insektenöl, noch stärker bevorzugt 35% oder mehr.

Ferner weist das Insektenöl in bestimmten Ausführungsformen einen Anteil einfach ungesättigter Fettsäuren von 15% bis 55% auf, bezogen auf die Gesamtmenge von Fettsäuren in dem Insektenöl. Sofern bestimmte Fettsäuren für die Herstellung eines spezifischen Harzes besonders erwünscht sind, kann die Menge der Fettsäuren selbstverständlich auch höher sein. Besonders hohe Werte erwünschter Fettsäuren können durch z. B. Auswahl einer oder mehrerer bestimmter Insektenarten oder Anreicherung dieser Fettsäuren erzielt werden. Daher kann das Insektenöl einen Anteil einfach ungesättigter Fettsäuren von 15% oder mehr, bezogen auf die Gesamtmenge von Fettsäuren in dem Insektenöl, vorzugsweise 25% oder mehr, stärker bevorzugt 35% oder mehr aufweisen.

Bevorzugt weist das Insektenöl einen Anteil mehrfach ungesättigter Fettsäuren von 10% bis 45% auf, bezogen auf die Gesamtmenge von Fettsäuren in dem Insektenöl. Das Insektenöl kann einen Anteil mehrfach ungesättigter Fettsäuren von 10% oder mehr umfassen, bezogen auf die Gesamtmenge von Fettsäuren in dem Insektenöl, vorzugsweise 20% oder mehr, stärker bevorzugt 30% oder mehr.

In verwandten Ausführungsformen umfasst das Insektenöl einen Anteil ungesättigter Fettsäuren (einfach plus mehrfach ungesättigte Fettsäuren) von 55% oder mehr, bezogen auf die Gesamtmenge von Fettsäuren in dem Insektenöl, vorzugsweise 60% oder mehr.

Die oben genannten Anteile von Fettsäuren beziehen sich jeweils auf den Gesamtgehalte an Fettsäuren, der sich aus freien Fettsäuren und den in Mono-, Di- oder Triglyceriden gebundenen Fettsäuren zusammensetzt.

Die Art der in den Insektenölen enthaltenen Fettsäuren lässt sich weiter nach Fettsäuren differenzieren. So kann es vorteilhaft sein, für bestimmte Anwendungen Insektenöle zu wählen, die einen großen Anteil bestimmter Fettsäuren umfassen. Die Fettsäureanteile bestimmter Fettsäuren in verschiedenen Insekten stellen sich dar wie folgt:

| Fettsäure [%] | Wachsmotte und deren Larven | Seidenspinnerraupe | Grillen/ Heimchen und deren Larven | Mehlkäfer und deren Larven | Soldatenfliege und deren Larven |
|---|---|---|---|---|---|
| Palmitinsäure | 32,0 | 12,0 | 20,0 | 17,0 | 12,0 |
| Myristinsäure | 0,2 | | | | 8,0 - 9,0 |
| Stearinsäure | 1,4 | 8,5 | 8,6 | 3,0 | < 3,0 |
| Linolensäure | 10,0 | 10,0 | 1,0 | 1,0 | 8,0 - 9,0 |
| Ölsäure | 50,0 | 23,0 | 33,0 | 40,0 | 10,0 |
| Linolsäure | 6,0 | 25,0 | 23,0 | 26,0 | |
| Laurinsäure | | | | | 55,0 |
| Palmitoleinsäure | | | | | < 3,0 |
| Caprinsäure | | | | | < 3,0 |

Die Insektenöle unterscheiden sich in ihrer Zusammensetzung von Pflanzen- und Tierölen. So umfassen Tieröle, wie Schweineschmalz, Rindertalg und Fischöle, z. B. in der Regel keine Linolensäure. Auch Pflanzenöle (wie Palmöl, Olivenöl, Kokosfett, Kakaobutter, Kürbiskernöl, Maikeimöl, Sonnenblumenkernöl) enthalten mit wenigen Ausnahmen (Leinsamenöl, Sojaöl, Rapsöl) keine Linolensäure.

Gleichzeitig unterscheiden sich auch die Insektenöle in ihrer Zusammensetzung, so dass je nach herzustellendem Harz und dessen gewünschten technischen Eigenschaften auf verschiedene Insektenöle zurückgegriffen werden kann. Die Fettsäuren beeinflussen die Eigenschaften durch ihre Menge sowie die Anzahl ihrer Doppelbindungen. Ein hoher Anteil ungesättigter Fettsäuren führt zu einer schnellen Trocknung und hohem Glanz. Ein hoher Anteil gesättigter Fettsäuren senkt den Polymerisations- und Verzweigungsgrad, die Viskosität, Trocknungsgeschwindigkeit und Härte. Gleichzeitig wird die Löslichkeit in Benzin und auch die Witterungsbeständigkeit verbessert. Für bestimmte Anwendungen kann es zum Beispiel vorteilhaft sein, ein Insektenöl mit einem hohen Laurinsäureanteil zu verwenden. Laurinsäure ist eine gesättigte Fettsäure mit der Summenformel C₁₂H₂₄O₂ (Synonym: Dodecansäure). In diesen Ausführungsformen ist die Verwendung von Soldatenfliegenöl besonders bevorzugt. Zur Herstellung des Öls können Soldatenfliegen im Larvenstadium verwendet werden oder ein Gemisch aus Soldatenfliegen in unterschiedlichen Entwicklungsstadien. Für andere Anwendungen kann es vorteilhaft sein, wenn das Insektenöl einen bestimmten Anteil einer bestimmten Fettsäure enthält, z. B. 0,5 bis 5% Linolensäure. Für diese Anwendungen kann es vorteilhaft sein, dass das Insektenöl ein Grillen- oder Mehlkäferöl ist, oder ein Gemisch derselben.

Das Insektenöl kann in dem erfindungsgemäßen Verfahren mit einem oder mehreren Polyolen umgesetzt werden und/oder epoxidiert, oxidiert, hydriert und/oder hydroxiliert werden. Die Reihenfolge und Anzahl dieser Schritte wird dabei so abgestimmt, dass das gewünschte Harz erzeugt wird.

In einem Schritt (b1) des erfindungsgemäßen Verfahrens kann das Insektenöl z. B. mit einem oder mehreren Polyolen umgesetzt werden. Das "Umsetzen" des Insektenöls kann z. B. eine Veresterung und/oder eine Kondensation sein. Durch das Umsetzen werden insbesondere in dem Insektenöl enthaltene Fettsäuren (bevorzugt freie Fettsäuren) mit dem Polyol verknüpft. Je nach Reaktivität des Polyols können ein oder mehrere Fettsäuren mit dem Polyol verknüpft werden. Die Reaktionsbedingungen können derart gewählt sein, dass durchschnittlich nur eine Fettsäure mit dem Polyol verknüpft wird. In einer Ausführungsform wird das Insektenöl mit einem oder mehreren Polyolen verestert. Geeignete Versterungsreaktionen sind Fachleuten bekannt.

Die Polyole können ausgewählt sein aus der Gruppe bestehend aus Diolen, Glycerin, Penthaerythrit, Sorbitol und anderen höherwertigen Alkoholen, wobei Diole, Glycerin und Penthaerythrit bevorzugt sind. In einer Ausführungsform ist das Polyol Glycerin. In einer alternativen Ausführungsform ist das Polyol Penthaerythrit. Es können zur Umsetzung des Insektenöls ein oder mehrere verschiedene Polyole verwendet werden. Auch hierdurch können unterschiedliche Eigenschaften in dem Harz erzeugt werden. Bevorzugt wird allerdings nur eine Art von Polyol in Schritt (b1) verwendet.

In einem Schritt (b2) des Verfahrens kann das Insektenöl epoxidiert, oxidiert, hydriert und/oder hydroxiliert werden. Durch diesen Schritt werden reaktive Gruppen in das Insektenöl, insbesondere in die freien Fettsäuren und Fettsäurereste des Insektenöls eingeführt. Durch das Einführen der reaktiven Gruppen wird das Harz polymerisationsfähig und/oder seine Polymerisationseigenschaften werden verbessert.

Schritt (b2) kann dabei vor oder nach Schritt (b1) durchgeführt werden. In einer Ausführungsform wird Schritt (b1) vor Schritt (b2) durchgeführt. Auch durch die Reaktionsreihenfolge können die Eigenschaften der resultierenden Harze verändert werden und z. B. an bestimmte Anforderungen angepasst werden. Auf diese Weise können z. B. reaktive (z. B. epoxidierte) Polyesterharze oder Alkydharze hergestellt werden. In einer bevorzugten Ausführungsform umfasst daher das Harz Epoxy- und/oder Hydroxygruppen, besonders bevorzugt Epoxygruppen. Es ist erfindungsgemäß bevorzugt, sowohl Schritt (b1) als auch Schritt (b2) durchzuführen.

Alternativ können zunächst in einem Schritt (b2) im Insektenöl vorhandene freie Fettsäuren und Fettsäurereste epoxidiert, oxidiert, hydriert und/oder hydroxiliert werden. Anschließend kann eine Umsetzung gemäß Schritt (b1) stattfinden. Sofern in dem erfindungsgemäßen Verfahren keine Umsetzung gemäß Schritt (b1) durchgeführt wird, so können die erzeugten Zwischenprodukte ebenfalls in der Herstellung von Beschichtungs- oder Klebstoffzusammensetzungen verwendet werden. Diese Zwischenprodukte sind insbesondere geeignet als Weichmacher.

In einer bevorzugten Ausführungsform wird das Insektenöl in Schritt (b2) epoxidiert. Ein Beispiel ist z. B. die Durchführung einer Epoxidierung durch eine Prileschajew-Reaktion. Dabei werden in Anwesenheit von Persäuren ungesättigte Verbindungen in den Fettsäuren zu Oxiranen umgesetzt. Alternativ kann eine intermolekulare "Selbst"-Epoxidierung durchgeführt werden.

Alternativ oder zusätzlich zur Epoxidierung in Schritt (b2) kann das Insektenöl hydroxiliert werden. So können z. B. bei einer zusätzlichen Hydroxilierung Epoxidgruppen der Fettsäuren hydroxiliert werden. Dabei entstehen Diolgruppen.

Das Insektenöl kann alternativ oder zusätzlich auch hydriert werden. Dabei werden insbesondere ungesättigte Bindungen in den Fettsäuren hydriert. Harze, die hydrierte, ungesättigte Fettsäuren umfassen, sind z. B. zur Rheologiebeeinflussung in Beschichtungs- und Klebstoffzusammensetzungen geeignet.

Schließlich ist es auch alternativ oder zusätzlich möglich, das Insektenöl zu oxidieren. Geeignete Verfahren sind Fachleuten bekannt und werden z. B. zur Herstellung von "geblasenen Ölen" eingesetzt. So kann z. B. in Gegenwart von Übergangsmetall-Katalysatoren eine Oxidation mit dem Luftsauerstoff oder reinem Sauerstoff induziert werden. Oxidierte Insektenöle bilden Harze mit einem höheren Polymerisationsgrad, so dass die Harze höhere molekulare Massen und höhere Viskositäten aufweisen. Die Harze können z. B. Harze sein, die nicht oder nur sehr wenig migrieren.

"Harze" im Sinne der Erfindung sind z. B. ausgewählt aus der Gruppe bestehend aus Polyesterharzen, Epoxidharzen und Alkydharzen. Fachleute aus dem Bereich der Beschichtungs- und Klebstofftechnologie ist bekannt, dass diese Gruppen von Harzen in ihrer chemischen Struktur durchaus deutlich voneinander abweichen können. Den Harzen ist jedoch gemein, dass sie Fettsäurereste umfassen. Darüber hinaus sind die Harze polymerisationsfähig, wobei die Polymerisation auf weitere Komponenten und/oder bestimmte Temperaturen oder andere Umweltbedingungen angewiesen sein kann. Durch ihre Polymerisationsfähigkeit können die Harze bzw. die Harze enthaltene Verbindungen, wie an anderer Stelle näher erläutert, ausgehärtet werden. Durch die Aushärtung kann vorzugsweise ein fester Klebstoff- oder Beschichtungsfilm/-schicht gebildet werden.

In einem Aspekt betrifft die Erfindung ein Harz für eine Beschichtungs- und/oder Klebstoffzusammensetzung, wobei das Harz mittels des erfindungsgemäßen Verfahrens herstellbar ist.

Epoxidharze sind Harze, die eine oder mehrere Epoxidgruppen tragen. Geeignete Reaktionen zur Epoxilierung von sind Fachleuten bekannt (vgl. oben). Epoxidharze aus Insektenölen sind besonders zur Elastifizierung von Beschichtungs- und Klebstoffzusammensetzungen geeignet.

Polyesterharze sind Harze, die mehr als eine Estergruppe umfassen. Bevorzugte Polyesterharze sind ungesättigte Polyesterharze. Weiter bevorzugt umfassen die Polyesterharze reaktive Gruppen, wie Epoxidgruppen und/oder Hydroxylgruppen. Zur Herstellung solcher epoxidierter und/oder hydroxylgruppenhaltiger Polyesterharze werden insbesondere die Doppelbindungen in den ungesättigten Fettsäureresten der Polyesterharze (z. B. den Linolen-, Palmitin- und/oder Ölsäureresten) epoxidiert bzw. hydroxyliert.

Alkydharze sind hydrophobe Polymere, die durch Kondensation mehrwertiger Alkohole, z. B. Glycerin, mit mehrprotonigen Säuren und Ölen oder Fettsäuren erzeugt werden können. Das Harz kann somit ein Alkydharz sein. Dabei ist es besonders bevorzugt, dass das Harz ein Alkydharz ist und das Insektenöl einen Anteil ungesättigter Fettsäuren von 65% oder mehr umfasst, bezogen auf die Gesamtmenge von Fettsäuren in dem Insektenöl.

Das hergestellte Harz kann, je nach Zusammensetzung, bei Raumtemperatur (16°C bis 26°C) in einem flüssigen oder festen Aggregatszustand vorliegen. Ist das Harz bei Raumtemperatur fest, so können die mit dem Harz hergestellten Beschichtungs- und Klebstoffzusammensetzungen in Pulverform vorliegen, z. B. als Pulverlack. Solche Zusammensetzungen in Pulverform können z. B. im Sprüh- oder Wirbelsinterverfahren auf Oberflächen aufgebracht werden.

In einem weiteren Aspekt betrifft die Erfindung eine Beschichtungs- oder Klebstoffzusammensetzung umfassend ein erfindungsgemäßes Harz. In einem verwandten Aspekt ist die Erfindung auf eine Beschichtungs- oder Klebstoffzusammensetzung gerichtet, die unter Verwendung eines erfindungsgemäßen Harzes herstellbar ist.

Die aus den Insektenölen erfindungsgemäß hergestellten Beschichtungs- und Klebstoffzusammensetzungen umfassen jegliche Beschichtungs- und Klebstoffzusammensetzungen, die unter Verwendung von Harzen von Fettsäuren und/oder Mono-, Di- und/oder Triglyceriden als Rohstoffen herstellbar sind. Insbesondere sind solche Zusammensetzungen umfasst, deren Herstellung die Erzeugung von einem oder mehreren Harzen als Zwischenprodukte umfasst, bevorzugt von einem oder mehreren Epoxidharzen, Alkydharzen und/oder einem oder mehreren Polyesterharzen.

Die Beschichtungszusammensetzung kann z. B. ausgewählt sein aus der Gruppe bestehend aus Lacken, wie *High-Solid*-, Industrie-, Verpackungs-, Kunststoff-, Möbel-, Parkett-, Maler-, Pulver-, Flüssig- und *Softfeel*-Lacken; Can- und *Coil*-Harzen; Farben; wässrigen Emulsionen; Einbrennbeschichtungen; Zweikomponentensystemen und dergleichen. Beispielhafte Zweikomponentensysteme sind geeignet für die Verwendung im Automobil-, Windkraftanlagen- und Luftfahrzeugbau. Es ist bevorzugt, dass die Beschichtungszusammensetzung ein Lack ist, wie z. B. ein Pulverlack oder ein Flüssiglack.

Es versteht sich, dass dabei spezifische Harze für einzelne Anwendungen bzw. Zusammensetzungen besonders geeignet sind:
1. So wird erfindungsgemäß durch Herstellung eines Polyesterharzes, mit vorzugsweise epoxidierten und/oder hydroxylierten Fettsäureresten, ein Harz erzeugt, das besonders geeignet ist für Beschichtungszusammensetzungen für *High-Solid*-Lacke und wässrige Emulsionen. Diese Beschichtungszusammensetzungen könnten als Industrie-, Kunststoff-, Möbel- und Parkettlacke verwendet werden. Vielfach finden sie Einsatz als Einbrennbeschichtungen, unter anderem in Verbindung mit z. B. Melaminharzen, oder in Zweikomponentensystemen, unter anderem in Verbindung mit Amin- und/oder Isocyanatkomponenten. Darüber hinaus können diese Harze auch zur Elastifizierung von Beschichtungsstoffen (wie Korrosionschutzbeschichtungen), Fußbodenbelägen und Klebstoffen, bei der Herstellung von *Softfeel*-Lacken, und in *Can-* und *Coil*-Harzen eingesetzt werden Letztere kommen in hochflexiblen Beschichtungen im Bereich der Dosenherstellung oder in Verpackungslacken zum Einsatz.
2. In einer Ausgestaltung dieser Ausführungsform umfasst das Polyesterharz einen hohen Anteil gesättigter Fettsäuren. Geeignete Anteile ergeben sich aus den hier an anderer Stelle definierten Anteilen gesättigter Fettsäuren des Ausgangsstoffs Insektenöl. Entsprechend weist das Polyesterharz bevorzugt einen Anteil gesättigter Fettsäuren von 25% bis 45% auf, bezogen auf die Gesamtmenge von Fettsäuren in dem Polyesterharz. Mit anderen Worten umfasst das Polyesterharz bevorzugt einen Anteil gesättigter Fettsäuren von 25% oder mehr, bezogen auf die Gesamtmenge von Fettsäuren in dem Polyesterharz, noch stärker bevorzugt 35% oder mehr. Solche Polyesterharze sind als Hartharze besonders geeignet. Hartharze können verwendet werden, um den Glanz und die Fülle von Lacken zu steigern, ohne reaktiv zu sein.
3. In einer anderen Ausgestaltung dieser Ausführungsform umfasst das Polyesterharz einen hohen Anteil ungesättigter Fettsäuren. Vorzugsweise ist das Polyesterharz chemisch gehärtet. Solche Polyesterharze sind insbesondere für Gelcoats und Lacke für z. B. Caravanaufbauten und Anhänger, den Yachtinnenausbau und den Behälterbau geeignet. Alternativ kann das Polyesterharz UV-induziert gehärtet sein. Solche Polyesterharze sind insbesondere für die Verwendung in der Möbelindustrie und die Beschichtung von MDF-, HPL- und anderen Faserplatten geeignet.
4. In einer alternativen Ausführungsform ist das Harz ein Alkydharz. Das Alkydharz kann z. B. mittels Umesterung von ungesättigten Fettsäuren hergestellt werden. Alkydharze sind besonders für den Bereich der Maler- und Industrielackierung geeignet. Das Alkydharz kann ein lang-, mittel- oder kurzöliges Alkydharz sein. Die Alkydharze reagieren mit metallorganischen Katalysatoren (Trocknern) zu festen Filmen.

Es versteht sich, dass das erfindungsgemäß hergestellte Harz in den Beschichtungs- und Klebstoffzusammensetzungen mit einem oder mehreren weiteren natürlichen oder synthetischen Ölen und/oder Harzen gemischt vorliegen kann. So können die Zusammensetzungen z. B. auch ein oder mehrere pflanzliche Öle und/oder aus solchen Ölen erzeugte Harze enthalten.

Entsprechend können auch die hierin beschriebenen Verwendungen die gleichzeitige oder sukzessive Verwendung eines Insektenöls und eines oder mehrerer weiterer natürlicher und/oder synthetischer Öle zur Herstellung eines Harzes für eine Beschichtungs- und/oder Klebstoffzusammensetzung umfassen.

Die Beschichtungs- bzw. Klebstoffzusammensetzungen können darüber hinaus Verbindungen umfassen, die die Aushärtung der Zusammensetzung fördern, z. B. geeignete Katalysatoren, wie z. B. metallorganische Katalysatoren (Trockner), Amine und/oder Isocyanate. Solche Verbindungen fördern das Aushärten der Zusammensetzung durch Polymerisations- und/oder Additionsreaktionen.

Die Beschichtungs- bzw. Klebstoffzusammensetzungen können ferner synthetische oder natürliche Bindemittel auf Basis von Polyolen, Epoxiden, Alkydharzen, Polyestern (Hydroxy-gesättigte oder ungesättigte), Acrylaten, Acetaten, Isocyanaten, Polycarbodiimiden, Aminen, SH-Gruppen und dergleichen umfassen. Die Bindemittel können der Zusammensetzung in flüssiger oder fester Form zugesetzt werden, z. B. in Wasser emulgierter Form. Dem Fachmann ist bekannt, dass die Auswahl weiterer Zusatzstoffe (z. B. der unten genannten) in der Regel auf Basis des gewählten Bindemittels getroffen wird.

Die Zusammensetzungen können anorganische oder organische Pigmente, Füllstoffe und/oder Farbstoffe umfassen. Diese Stoffe können farbgebend wirken und/oder weitere technische Aufgaben erfüllen. Die Stoffe können z. B. dem Korrosionsschutz, Abriebschutz und/oder Brandschutz dienen. Geeignete Füllstoffe umfassen Fasern, Mikroholkugeln (gefüllt oder ungefüllt).

Ferner können die Zusammensetzungen Additive z. B. zur Steuerung des Verlaufsverhaltens, Entschäumung, Benetzung (Untergrund und Pigmente), Beeinflussung der Rheologie, Oberflächenbeschaffenheit, Mattierung, oder anderer visueller oder haptischer Eigenschaften umfassen.

Die Beschichtungs- bzw. Klebstoffzusammensetzungen können auch Lösungsmittel umfassen. Geeignete Lösungsmittel umfassen aliphatische, aromatische, polare und unpolare Lösungsmittel. Das Lösungsmittel kann wasserverdünnbar sein. In einer Ausführungsform ist das Lösungsmittel Wasser.

In einem weiteren Aspekt betrifft die Erfindung Formkörper, die eine Beschichtung aus einer erfindungsgemäßen Beschichtungszusammensetzung umfassen, und/oder mittels einer erfindungsgemäßen Klebstoffzusammensetzung verklebt wurden.

Geeignete Verfahren zur Aufbringung einer Beschichtung auf einen Festkörper sind Fachleuten bekannt. In der Regel wird die erfindungsgemäße Beschichtungs- bzw. Klebstoffzusammensetzung in flüssiger Form auf eine Oberfläche eines Festkörpers aufgebracht (durch z. B. Rollen oder Sprühen) und anschließend ausgehärtet.

Typische Aushärtungsverfahren umfassen chemische und physikalische Aushärtungsverfahren. Ein geeignetes physikalisches Aushärtungsverfahren ist das Verdunsten eines Lösungsmittels. Physikalische Aushärtungsverfahren sind besonders geeignet, wenn die Zusammensetzung Polyesterharze umfasst. Chemische Aushärtungsverfahren umfassen die UV-induzierte Aushärtung mit UV-Initiatoren (vermittelt über die Doppelbindung bei Polyesterharzen mit ungesättigten Fettsäuren), chemisch induzierte Aushärtung mittels Katalysatoren (z. B. bei Polyesterharzen mit ungesättigten Fettsäuren und bei Epoxidharzen). Die Aushärtung kann bei Temperaturen von Raumtemperatur (16°C bis 26°C) bis 200 °C durchgeführt werden, vorzugsweise bei Raumtemperatur.

### Beispiele

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

### Beispiel 1: Gewinnung von Soldatenfliegenmadenöl

Schwarze Soldatenfliegen (*Hermetia illucens*, Zweiflügler) wurden auf organischen Abfallstoffen bis zum Larvenstadium (Maden) kultiviert. Anschließend wurden die Maden schonend auf Feuchten zwischen 5 % und 15 % getrocknet. Die getrockneten Maden wurden dann mittels mechanischer Extraktion ausgepresst. Dieses Extraktionsverfahren ähnelt der Gewinnung von pflanzlichen Fetten aus Pflanzen wie der Sonnenblume, Raps oder Oliven. Durch Variation von Materialfeuchte, Materialtemperatur, Drehzahl der Presse und Geometrie der Pressen konnten die Entölungsraten gesteigert werden.

Neben diesem Verfahren, ist es ähnlich wie bei den Pflanzenölen auch denkbar, alternative Extraktionsverfahren zu verwenden, um die Ölausbeute zu maximieren. Geeignete Verfahren sind Fachleuten bekannt und umfassen z. B. Pressen (Kaltpressen, Heißpressen zur Erzeugung raffinierter Öle, Extraktion mit Lösungsmitteln (wie Hexan, Petrolether, Benzol, Benzin, Schwefelkohlenstoff u. a.), Extraktion mit superkritischen Fluiden (Supercritical Fluid Extraction = SFE) wie (CO₂). Eine Unterstützung durch Mikrowellen oder Ultraschall ist bei allen Press- und Extraktionsverfahren möglich. Auch die Reinigung bzw. Raffination mit Alkalien ist denkbar.

### Beispiel 2: Alkydharz aus Soldatenfliegenmadenöl

Das Soldatenfliegenmadenöl wurde anschließend in der Herstellung eines Alkydharzes wie folgt eingesetzt. Die Fettsäureglyceride wurden mit Glycerol bei 240°C bis 280°C in Gegenwart von Magnesium-Ethanolat als Katalysator umgesetzt. Es ist ebenfalls denkbar statt Glycerol andere Polyole (wie Pentaerythrit, Dipentaerythrit, Trimethylpropan, Trimethylolethan, Sorbitol oder Glycole) und/oder als Katalysator statt Magnesium-Ethanolat andere Erdalkalimetall-Alkoholate zu verwenden. Bei dieser Reaktion entstanden Monoglyceride, die in einer zweiten Stufe bei 200 bis 300°C unter Inertgas mit der Dicarbonsäure Phthalsäure umgesetzt wurden. Es ist ebenfalls denkbar andere Carbonsäuren, wie Iso- oder Terephthalsäure zu verwenden. In diesem Falle könnte zuerst die Umsetzung mit einer Carbonsäure durchgeführt werden und erst anschließend die Umsetzung mit einem Polyol.

Das Soldatenfliegenmadenöl enthält einen Anteil von 55% der gesättigten Laurinsäure, so dass das resultierende Produkt einen vergleichsweise geringen Polymerisations- und Verzweigungsgrad aufweist, sowie eine geringe Viskosität.

Das erzeugte Alkydharz kann beispielsweise als Bindemittel in Maler- und Bautenlacken, Korrosionsschutz, Spachtelmassen, Kitten und Offset-Druckfarben eingesetzt werden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Verwendung eines Insektenöls zur Herstellung eines Harzes für eine Beschichtung- und/oder Klebstoffzusammensetzung.

2. Verfahren zur Herstellung eines Harzes für eine Beschichtungs- und/oder Klebstoffzusammensetzung, Schritte umfassend bei denen man
a) ein Insektenöl bereitstellt; und
b1) das Insektenöl mit einem oder mehreren Polyolen umsetzt, und/oder
b2) das Insektenöl epoxidiert, oxidiert, hydriert und/oder hydroxiliert, wobei Schritt (b2) vor oder nach Schritt (b1) durchgeführt wird.

3. Verfahren nach einem der vorangehenden Ansprüche, wobei sowohl Schritt (b1) als auch Schritt (b2) durchgeführt wird.

4. Verfahren nach einem der vorangehenden Ansprüche, wobei das Insektenöl einen Anteil gesättigter Fettsäuren von 25% oder mehr umfasst, bezogen auf die Gesamtmenge von Fettsäuren in dem Insektenöl.

5. Verfahren nach einem der vorangehenden Ansprüche, wobei das Insektenöl einen Anteil gesättigter Fettsäuren von 35% oder mehr umfasst, bezogen auf die Gesamtmenge von Fettsäuren in dem Insektenöl.

6. Verfahren nach einem der vorangehenden Ansprüche, wobei das Insektenöl einen Anteil ungesättigter Fettsäuren von 55% oder mehr umfasst, bezogen auf die Gesamtmenge von Fettsäuren in dem Insektenöl.

7. Verfahren nach einem der vorangehenden Ansprüche, wobei das Insektenöl einen Anteil ungesättigter Fettsäuren von 60% oder mehr umfasst, bezogen auf die Gesamtmenge von Fettsäuren in dem Insektenöl.

8. Verfahren nach einem der vorangehenden Ansprüche, wobei das Insektenöl Öl aus Insektenlarven, Insektenpuppen und/oder aus erwachsenen Insekten ist.

9. Verfahren nach einem der vorangehenden Ansprüche, wobei das Insektenöl Öl aus Insektenlarven ist.

10. Verfahren nach einem der vorangehenden Ansprüche, wobei das Harz Epoxy- und/oder Hydroxygruppen umfasst.

11. Verfahren nach einem der vorangehenden Ansprüche, wobei das Harz ein Alkydharz ist.

12. Verfahren nach einem der vorangehenden Ansprüche, wobei das Harz ein Alkydharz ist und das Insektenöl einen Anteil ungesättigter Fettsäuren von 65% oder mehr umfasst, bezogen auf die Gesamtmenge von Fettsäuren in dem Insektenöl.

13. Verfahren nach einem der vorangehenden Ansprüche, wobei das Insektenöl Öl aus Soldatenfliegen ist, vorzugsweise aus Soldatenfliegen im Larvenstadium.

14. Harz für eine Beschichtungs- und/oder Klebstoffzusammensetzung, wobei das Harz mittels eines Verfahrens gemäß einem der Ansprüche 2 bis 13 herstellbar ist.

15. Beschichtungs- oder Klebstoffzusammensetzung, wobei die Zusammensetzung ein Harz gemäß Anspruch 14 umfasst und/oder unter Verwendung eines Harzes gemäß Anspruch 14 herstellbar ist.
